# EUROPEAN PATENT SPECIFICATION

(11) **EP 3 162 554 B1**
(45) Date de publication et mention de la délivrance du brevet: **07.03.2018**
(21) Numéro de dépôt: 16020423.6
(22) Date de dépôt: 27.10.2016
(51) Int. Cl.: B32B 3/02, B32B 15/02, B32B 15/14, B32B 15/18, B32B 3/04

(54) **PAROI ET CLOISON POUR ENCEINTE SÉCURISÉE**
MAUER UND WANDUNG FÜR SICHERHEITSSCHRANK
WALL AND PANEL FOR SAFETY CABINET

(30) Priorité: 30.10.2015 BE 201500251
(43) Date de publication de la demande: 03.05.2017
(73) Titulaire: Metal Quartz SA, 7600 Peruwelz (BE)
(72) Inventeur: Dalla Valle, Dario, B-7600 Péruwelz (BE)
(74) Mandataire: Powis de Tenbossche, Roland

(56) Documents cités:
- US-A1- 2012 321 858
- US-A1- 2015 268 010
- US-B1- 8 096 223

## Description

La présente invention a pour objet une paroi ou cloison pour une enceinte résistante à au moins une agression mécanique, mais également à d'autres agressions ou sollicitation, telles que agression thermique, chocs, châlumeau, etc. Des enceintes de sécurité existent et sont par exemple commercialisées sous le nom commercial " bunkerkit". D'autres exemples sont décrits dans les documents suivants: US8096223, US20150268010, US20120321858. Bien que ces enceintes présentent un degré de sécurité important, il s'est avéré nécessaire pour des applications particulières, de rechercher des systèmes encore plus performants contre des agressions mécaniques et thermiques.

Des recherches et des tests ont permis de démontrer qu'en associant de manière appropriée des couches distinctes, il était possibe d'assurer une excellente résistance aux agressions mécaniques et thermiques (par exemple répondant à des critères au moins tels que définis dans la norme EN 1143 - 1 de juillet 2012), tout en assurant une excellente liaison entre les panneaux directement entre eux ou à des pôteaux intermédiaires, la liaison étant opérée du côté sécurisée.

L'invention a ainsi pour objet une paroi ou cloison pour une enceinte résistante à au moins une ou des agressions mécaniques, avantageusement également à d'autres types d'agressions, ladite paroi ou cloison comprenant :
- une première tôle en acier sensiblement pleine d'épaisseur comprise entre 2 et 5mm et dont les bords latéraux sont pliés pour définir une cuvette avec un fond, lesdits bords latéraux pliés étant avantageusement soudés les uns aux autres ;
- une série de panneaux comprenant au moins des fibres (avantageusement au moins partiellement cellulosiques) et un liant, lesdits panneaux présentant une densité d'au moins 600kg/m³, avantageusement de 700 à 1000kg/m³, et une épaisseur comprise entre 3 et 155mm, avantageusement de 4 à 10mm,
- au moins une deuxième tôle en acier sensiblement pleine d'épaisseur comprise entre 2 et 5mm, et
- au moins une couche de métal déployé en acier d'épaisseur apparente comprise entre 2 et 20mm, avec un maillage avec une diagonale courte de 10 à 40mm, avantageusement de 20 à 30mm, sur une diagonale longue de 15 à 70mm, avantageusement de 40 à 60mm, mais supérieure à la diagonale courte, défini par des lanières de largeur comprise entre 2 et 10mm, avantageusement de 3 à 7mm, ladite couche présentant une surface de passage ouverte égale à 30 à 80% de la surface totale formée par les lanières et la surface de passage ouverte,
dans laquelle la couche de métal déployé (avantageusement en acier, acier galvanisé, acier inox) est située entre un premier panneau de fibres (avantageusement au moins partiellement cellulosiques) et un deuxième panneau de fibres (avantageusement au moins partiellement cellulosiques) pour former un ensemble comprenant un métal déployé, et dans lequel ledit ensemble est situé dans ladite cuvette entre ledit fond de la cuvette de la première tôle et ladite deuxième tôle en acier également située dans ladite cuvette.

Dans une forme de réalisation assurant encore une meilleure protection contre les agressions, la paroi ou cloison présente en outre les caractéristiques suivantes :
la couche de métal déployé est une couche de métal déployé aplati avec une épaisseur apparente de 2 à 6mm avec un maillage avec une diagonale courte de 15 à 30mm sur une diagonale longue de 35 à 60mm, défini par des lanières de largeur comprise entre 3 et 6mm, ladite couche de métal déployé aplati étant située entre (a) un premier panneau comprenant au moins des fibres (avantageusement au moins partiellement cellulosiques) et un liant, ledit premier panneau présentant une densité de 700 à 1000kg/m³ et une épaisseur comprise entre 5 et 10mm, et (b) un deuxième panneau comprenant au moins des fibres (avantageusement au moins partiellement cellulosiques) et un liant, ledit premier panneau présentant une densité de 700 à 1000kg/m³ et une épaisseur comprise entre 5 et 10mm, ladite couche de métal déployé aplati étant attachée auxdits premier et deuxième panneaux au moyen de points ou zones ou couche(s) de colle, en particulier de colle choisie parmi les colles époxy, silicone, polyuréthanes ou polymères hybrides, en particulier polyuréthanne-silicone. La colle utilisée est donc de préférence adaptée pour assurer une bonne adhésion élastique et souple, permettant ainsi de reprendre des différences de dilatation et/ou de reprendre des efforts de vibrations en cas d'agression mécaniques.

De manière préférée, la couche de métal déployé aplati définit entre lesdits premier et deuxième panneaux une ou des chambres remplie d'air. Cette ou ces chambres sont ainsi des moyens pour réceptionner des poussières générées lors d'agressions mécaniques (par exemple dus à un foret), cette accumulation de poussières étant alors propice pour générer des zones de surchauffe de l'outil de forage et donc sa fragilisation ou son endommagement. De plus la zone laissée libre permet au métal déployé de se déformer lorsqu'il entre en contact avec l'outil de forage, créant ainsi dans des cas d'agression, un bourrelet s'opposant au déplacement de l'outil de forage.

Selon une forme de réalisation préférée, la couche de métal déployé aplati comprend une résine, avantageusement du type époxy ou époxyde, chargée au moins en particules abrasives de granulométrie de moins de 2mm, en particulier de moins de 1mm, et présentant une dureté sur l'échelle de Mohs supérieure à 8, en particulier supérieure à 9, et en un additif du type particules minérales à base de calcium et/ou de magnésium et/ou d'aluminium, de granulométrie inférieure à 2mm, en particulier inférieure à 1 mm, le rapport en poids particules abrasives / résine étant avantageusement compris entre 1 : 1 et 6 : 1.

La résine (avantageusement époxy ou époxyde) est par exemple une résine mono composant (par exemple polymérisable ou réticulable ou durcissant par radiation UV) ou à deux ou plus de deux composants (requérant alors un agent durcisseur ou de réticulation et/ou un catalyseur ou accélérateur de réticulation).

La résine sera choisie pour être apte à résister à haute température, par exemple à des températures supérieures à 180°C, voire 250°C pendant plus de 1 heure, voire beaucoup plus. La résine peut également être du type polyimide et/ou polyamide. A titre d'exemple uniquement de résines, on peut citer les résines commercialisées par Masterbond (résine époxyde, silicones ou polyuréthanes), société établie à 154 Hobart Street, Hackensack, NJ 07601 USA (http://www.masterbond-fr.com; site donnant tous détails quant à ces résines) ; le Torlon ® (polyamide-imide) commercialisé par Solvay, etc. La résine aura avantageusement une température de transition vitreuse ou de ramollissement supérieure à 180°C, voire beaucoup plus.

Les particules abrasives de grande dureté sont par exemple des carbures, du diamant, etc. On citera par exemple les carbures de silicium, de tungstène, de bore, les alumines, le chrome, le corindon, les poudres de diamant (naturel ou synthétique), et les mélanges de ces particules.

On a remarqué que la présence de particules minérales à base de calcium et/ou de magnésium et/ou d'aluminium (en particulier à base de calcium et/ou de magnésium) permettait d'améliorer la résistance au ramollissement de la couche, et donc le déchaussement des particules abrasives présentes ou attachées à la couche de résine. On citera en particulier comme particules minérales, les carbonates, les hydroxydes, les chlorures, les suphates, etc., la bohémite, les alumino-silicates, le mica et le kaolin, etc.

La couche de résine avec le métal déployé a par exemple une épaisseur de 3 à 20mm. La couche de résine est par exemple adaptée pour ne remplir que partiellement les ouvertures du métal déployé. Dans d'autres formes de réalisation, la résine chargée forme une couche dans laquelle le métal déployé est complètement noyé, laissant ou non des creux ou cavités aux emplacements des ouvertures du métal déployé.

Selon d'autres formes de réalisation selon l'invention, la paroi ou cloison comprenant une ou des couches de résine résistant à des températures de 180°C et de plus de 180°C, et présentant une résistance au feu.
Cette couche de résine, avantageusement du type époxy ou époxyde, est avantageusement chargée au moins en particules abrasives de granulométrie de moins de 2mm, en particulier de moins de 1mm, et présentant une dureté sur l'échelle de Mohs supérieure à 8, en particulier supérieure à 9, et en un additif du type particules minérales à base de calcium et/ou de magnésium et/ou d'aluminium, de granulométrie inférieure à 2mm, en particulier inférieure à 1mm, le rapport en poids particules abrasives / résine étant avantageusement compris entre 1 : 1 et 6 : 1.
La résine (avantageusement époxy ou époxyde) est par exemple une résine mono composant (par exemple polymérisable ou réticulable ou durcissant par radiation UV) ou à deux ou plus de deux composants (requérant alors un agent durcisseur ou de réticulation et/ou un catalyseur ou accélérateur de réticulation).
La résine sera choisie pour être apte à résister à haute température, par exemple à des températures supérieures à 180°C, voire 250°C pendant plus de 1 heure, voire beaucoup plus. La résine peut également être du type polyimide et/ou polyamide. A titre d'exemple uniquement de résines, on peut citer les résines commercialisées par Masterbond (résine époxyde, silicones ou polyuréthanes), société établie à 154 Hobart Street, Hackensack, NJ 07601 USA (http://www.masterbond-fr.com ; site donnant tous détails quant à ces résines) ; le Torlon ® (polyamide-imide) commercialisé par Solvay, etc. La résine aura avantageusement une température de transition vitreuse ou de ramollissement supérieure à 180°C, voire beaucoup plus.

Les particules abrasives de grande dureté sont par exemple des carbures, du diamant, etc. On citera par exemple les carbures de silicium, de tungstène, de bore, les alumines, le chrome, le corindon, les poudres de diamant (naturel ou synthétique), et les mélanges de ces particules.

On a remarqué que la présence de particules minérales à base de calcium et/ou de magnésium et/ou d'aluminium (en particulier à base de calcium et/ou de magnésium) permettait d'améliorer la résistance au ramollissement de la couche, et donc le déchaussement des particules abrasives présentes ou attachées à la couche de résine. On citera en particulier comme particules minérales, les carbonates, les hydroxydes, les chlorures, les suphates, etc., la bohémite, les alumino-silicates, le mica et le kaolin, etc.

La couche de résine peut être utilisée entre deux panneaux de fibres (par cellulosiques), entre deux tôles métalliques, entre un panneau de fibres et une tôle métallique. La couche de métal déployé peut être insérée entre deux couches de résine résistant à la température (couches de résine ne comprenant pas de métal déployé) a par exemple une épaisseur de 3 à 20mm, en particulier de 3 à 6mm.

Selon un détail avantageux, le métal déployé, avantageusement aplati, avantageusement partiellement noyé dans une couche de résine comprenant des particules abrasives, est recouvert sensiblement totalement le long de ses deux faces opposées par des panneaux de fibres (avantageusement au moins partiellement cellulosiques).

Selon une forme de réalisation particulière, un panneau de fibres (avantageusement au moins partiellement cellulosiques) d'un ensemble comprenant un métal déployé prend appui sur le fond de la cuvette avec interposition de points ou zones ou couche(s) de colle, en particulier choisi(e) s parmi les colles epoxy ou époxydes, silicone, polyuréthannes ou polymères hybrides, en particulier epoxy ou époxydes, polyuréthanne-silicone. La colle peut également être du type polyamide, poly imide ou polyamide-imide.

Selon une forme de réalisation particulièrement préférée, la paroi ou cloison comprend au moins une troisième tôle en acier d'épaisseur comprise entre 1 et 5mm, avantageusement entre 1,5mm et 4mm, dont les bords sont pliés de manière à définir une cuvette avec un fond, en ce que l'ensemble avec métal déployé est situé entre le fond de la cuvette formée par la première tôle et la troisième tôle, tandis que les bords pliés de la troisième tôle s'étendent respectivement le long des bords pliés de la première tôle. En outre, la deuxième tôle en acier sensiblement pleine d'épaisseur comprise entre 2 et 5mm s'étend dans la cuvette formée par la troisième tôle.

De préférence, lesdits premier et deuxième panneaux de l'ensemble avec métal déployé sont respectivement attachés au fond de la cuvette de la première tôle et à la troisième tôle au moyen de points ou zones de colle, en particulier choisie parmi les colles silicone, polyuréthanes ou polymères hybrides, en particulier polyuréthanne-silicone. Avantageusement, entre la deuxième tôle et le fond formé par la troisième tôle s'étend au moins un panneau comprenant au moins des fibres (avantageusement au moins partiellement cellulosiques) et un liant, lesdits panneaux présentant une densité d'au moins 600kg/m³, de préfrence de 700 à 1000kg/m³, et une épaisseur comprise entre 3 et 15mm, dont une face est attachée au moyen de points ou zones ou couche(s) de colle à la deuxième tôle ou au fond de la cuvette formée par la troisième tôle, ladite colle étant avantageusement choisie parmi les colles epoxy ou epoxyde, silicone, polyuréthannes ou polymères hybrides, en particulier epoxy ou epoxyde ou polyuréthanne-silicone.

Selon encore un détail plus préféré d'une forme de réalisation, la paroi ou cloison comprend au moins une quatrième tôle en acier d'épaisseur comprise entre 1 et 5mm, avantageusement entre 1,5mm et 4mm, dont les bords sont pliés de manière à définir une cuvette avec un fond, tandis que ladite quatrième tôle prend appui avec interposition d'au moins un panneau comprenant au moins des fibres (avantageusement au moins partiellement cellulosiques) et un liant, ledit panneau présentant une densité d'au moins 600kg/m³ et une épaisseur comprise entre 3 et 15mm, sur le fond de la cuvette formée par la troisième tôle. Avantageusement, en outre, ledit panneau est attaché à ladite troisième tôle et à la dite quatrième tôle au moyen de points ou zones ou couche(s) de colle, ladite colle étant avantageusement choisie parmi les colles epoxy ou epoxyde, silicone, polyuréthanes ou polymères hybrides, en particulier epoxy ou epoxyde ou polyuréthanne-silicone ou encore polyamide et/ou imide.

Selon une particularité de formes de réalisation, les bords pliés des première, troisième et/ou quatrième tôles s'étendent les uns à côté des autres et sont attachés les uns aux autres par des points de colle ou de soudure ou des zones ou couche(s) de colle ou de soudure.

Selon un détail avantageux, la première tôle est associée sur sa face opposée à celle formant la cuvette à au moins un plat en acier de dureté supérieure à 300HB (par exemple de 500HB, plus de 500HB), ledit plat surplombant au moins un bord plié de la première tôle.

L'invention a encore pour objet une enceinte résistante à une agression mécanique et à une agression thermique, ladite enceinte comprenant au moins une juxtaposition de panneaux ou cloisons selon l'invention.

De façon avantageuse, l'enceinte comporte en outre un des pôteaux pour relier deux panneaux ou cloisons, en particulier s'étendant dans des plans verticaux inclinés entre eux.

De préférence, le ou les pôteaux comprennent un profilé creux en acier d'épaisseur comprise entre 1 et 5mm, de section ouverte intérieure sensiblement carrée ou rectangulaire de surface comprise entre 30 à 200mm sur 30 à 200mm, tandis qu'un ensemble formé par un métal déployé en acier courbé associé le long de ses deux faces au moyen de colle à des morceaux de panneau à base de fibres (avantageusement au moins partiellement cellulosiques), ledit ensemble étant inséré dans ledit creux du profilé et épousant sensiblement deux côtés adjacents du profilé.

Selon des formes de réalisation, le pôteau présente l'une ou l'autre des caractéristiques suivantes :
- ensemble inséré dans le creux du profilé est associé à au moins deux tôles pliées supplémentaires et à au moins des morceaux de panneau de fibres (avantageusement au moins partiellement cellulosiques) placés entre les deux tôles pliées supplémentaires.
- l'ensemble associé avantageusement àdes tôles pliées avec interposition de morceaux de panneau de fibres (avantageusement au moins partiellement cellulosiques) laisse un espace libre ou un vide dans le creux rempli d'air.
- les morceaux de panneau proviennent d'un panneau comprenant au moins des fibres (avantageusement au moins partiellement cellulosiques) et un liant, lesdits panneaux présentant une densité d'au moins 600kg/m³ et une épaisseur comprise entre 3 et 15mm, et que le métal déployé en acier présente une épaisseur apparente comprise entre 2 et 20mm, avec un maillage avec une diagonale courte de 10 à 40mm sur une diagonale longue de 15 à 80mm, mais supérieure à la diagonale courte, défini par des lanières de largeur comprise entre 2 et 10mm, ladite couche présentant une surface de passage ouverte égale à 30 à 80% de la surface totale formée par les lanières et la surface de passage ouverte, ledit métal déployé étant de préférence du type aplati.

Des particularités et détails de l'invention ressortiront de la description détaillée suivante, dans laquelle il est fait référence aux dessins ci-annexés.

Dans ces dessins,
- la figure 1 est une vue schématique d'une enceinte selon l'invention,
- la figure 2 est une vue avant d'une cloison suivant l'invention,
- la figure 3 est une vue arrière de la cloison de la figure 2,
- la figure 4 est une en coupe partielle de la cloison de de la figure 2 (ligne IV-IV),
- les figures 5A,5B, 5C et 5D sont des vues en coupe d'un pôteau permettant une liaison de deux panneaux entre eux,
- la figure 6 est une vue en coupe de deux panneaux reliés entre eux;
- la figure 7 est une vue en coupe d'une paroi sous forme de poutre;
- les figures 8 et 9 sont des vues en coupe de pôteaux adaptés pour servir de liaison entre des panneaux,
- la figure 10 est une vue montrant la liaison de deux panneaux à angle droit,
- les figures 11 et 12 sont des vues d'un raccord entre un cadre d'une porte ou fenêtre avec une paroi,
- la figure 13 est une vue d'une paroi avec ouverture centrale,
- la figure 14 est une vue en coupe le long de la ligne XIV-XIV,

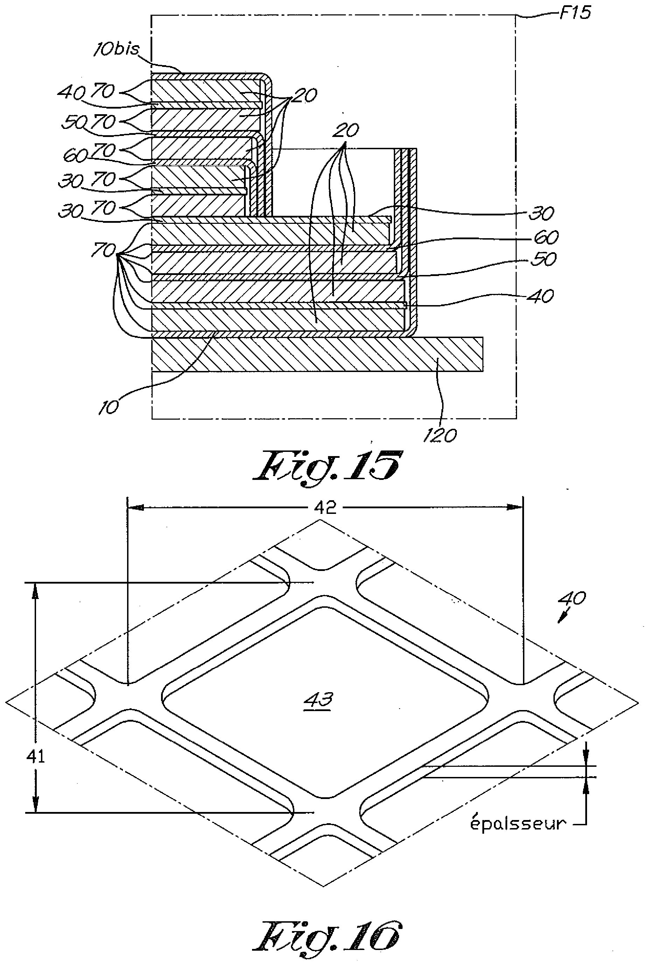

- la figure 15 est vue d'un détail B de la figure 14, et
- la figure 16 est une vue partielle du métal déployé 40.

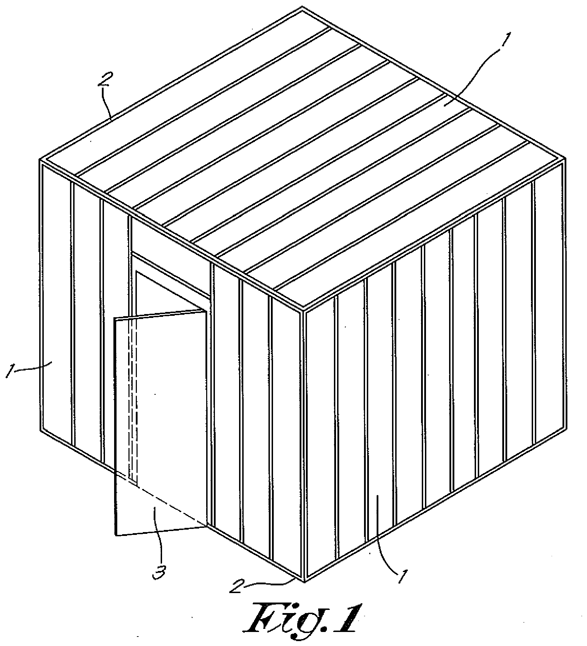

La figure 1 montre une enceinte 100 réalisée au moyen d'une série de parois 1 et de pôteaux ou poutres 2 situés aux arrêtes de l'enceinte 100. L'enceinte 100 est associée à une porte 3.

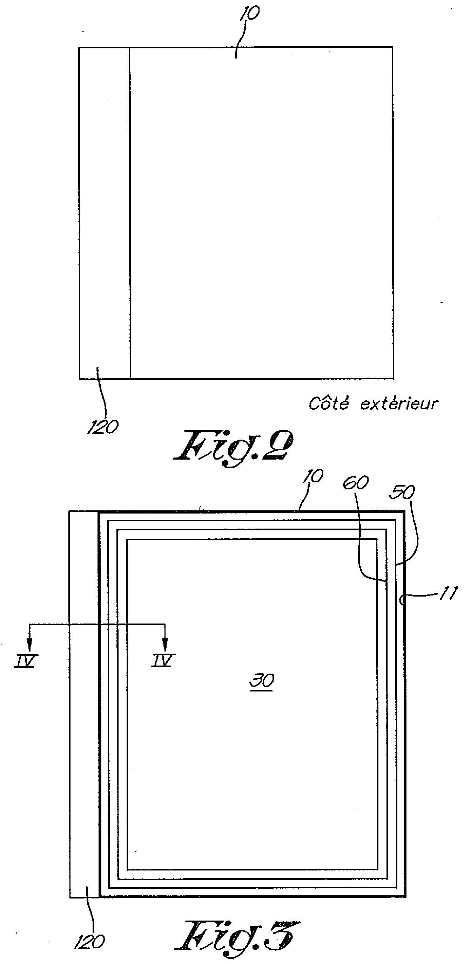

Les figures 2 à 4 sont des vues d'une paroi suivant l'invention.

Cette paroi ou cloison comprend :
- une première tôle en acier 10 sensiblement pleine d'épaisseur comprise entre 2 et 5mm (par exemple 3 à 4mm) et dont les bords latéraux 11 sont pliés pour définir une cuvette avec un fond 12, lesdits bords latéraux pliés 11 étant avantageusement soudés les uns aux autres de manière à former une cuvette étanche;
- une série de panneaux 20 comprenant au moins des fibres (avantageusement au moins partiellement cellulosiques) et un liant (par exemple un panneau MDF résistant à l'humidité à faible teneur en formaldhéhyde), lesdits panneaux présentant une densité d'au moins 600kg/m³ (par exemple de 800 à 1000kg/m³) et une épaisseur comprise entre 3 et 15mm (par exemple de 4 à 8mm),
- au moins une deuxième tôle en acier 30 sensiblement pleine d'épaisseur comprise entre 2 et 5mm et présentant une dureté de 500HB ou plus,
- au moins une couche de métal déployé 40 en acier (avantageusement aplati) d'épaisseur apparente comprise entre 2 et 20mm, avec un maillage avec une diagonale courte 41 de 10 à 40mm (par exemple de 20 à 30mm) sur une diagonale longue (42) de 15 à 70mm (par exemple de 40 à 60mm), mais supérieure à la diagonale courte, défini par des lanières (43) de largeur comprise entre 2 et 10mm (par exemple de 3 à 6mm), ladite couche présentant une surface de passage ouverte égale à 30 à 80% (avantageusment supérieure à 50% de manière à définir des vides) de la surface totale formée par les lanières et la surface de passage ouverte,
- une troisième tôle en acier 50 dont les bords 51 sont pliés de manière à former une cuvette,
- une quatrième tôle en acier 60 dont les bords 61 sont piés de manière à définir une cuvette, et
- des points de colle 70 distants les uns des autres.

La couche de métal déployé 40 est située entre un premier panneau de fibres (avantageusement au moins partiellement cellulosiques) 20 et un deuxième panneau de fibres (avantageusement au moins partiellement cellulosiques) 20 pour former un ensemble E comprenant un métal déployé. Ledit ensemble E est situé dans ladite cuvette de la première tôle 10 entre ledit fond 12 et ladite deuxième tôle 30 en acier également située dans ladite cuvette de la première tôle 10.

Ladite couche de métal déployé aplati 40 est donc située entre (a) un premier panneau 20 comprenant au moins des fibres (avantageusement au moins partiellement cellulosiques) et un liant, ledit premier panneau présentant une densité de 700 à 1000kg/m³ et une épaisseur comprise entre 5 et 10mm), et (b) un deuxième panneau 20 comprenant au moins des fibres (avantageusement au moins partiellement cellulosiques) et un liant, ledit premier panneau présentant une densité de 700 à 1000kg/m³ et une épaisseur comprise entre 5 et 10mm, ladite couche de métal déployé aplati 40 étant attachée auxdits premier et deuxième panneaux 20 au moyen de points ou zones de colle 70, en particulier de colle choisie parmi les colles silicone, polyuréthanes ou polymères hybrides, en particulier polyuréthanne-silicone.

La couche de métal déployé aplati 40 définit entre lesdits premier et deuxième panneaux 20 une ou des chambres remplie d'air.
La couche de métal déployé aurait pu être associée à de la résine pour former une couche de résine comprenant le métal déployé. Cette couche de résine peut alors être également la couche de colle formant une liaison entre lesdits panneaux 20.

Cette couche de résine est par exemple une couche de résine (éventuellement une série de couches) résistant à des températures de 180°C et de plus de 180°C, et présentant une résistance au feu.
Cette couche de résine, avantageusement du type époxy ou époxyde, est avantageusement chargée au moins en particules abrasives de granulométrie de moins de 2mm, en particulier de moins de 1mm), et présentant une dureté sur l'échelle de Mohs supérieure à 8, en particulier supérieure à 9, et en un additif du type particules minérales à base de calcium et/ou de magnésium et/ou d'aluminium, de granulométrie inférieure à 2mm, en particulier inférieure à 1mm, le rapport en poids particules abrasives / résine étant avantageusement compris entre 1 : 1 et 6 : 1.
La résine (avantageusement époxy ou époxyde) est par exemple une résine mono composant (par exemple polymérisable ou réticulable ou durcissant par radiation UV) ou à deux ou plus de deux composants (requérant alors un agent durcisseur ou de réticulation et/ou un catalyseur ou accélérateur de réticulation).
La résine sera choisie pour être apte à résister à haute température, par exemple à des températures supérieures à 180°C, voire 250°C pendant plus de 1 heure, voire beaucoup plus. La résine peut également être du type polyamide et/ou polyamide. A titre d'exemple uniquement de résines, on peut citer les résines commercialisées par Masterbond (résine époxyde, silicones ou polyuréthanes), société établie à 154 Hobart Street, Hackensack, NJ 07601 USA (http://www.masterbond-fr.com ; site donnant tous détails quant à ces résines) ; le Torlon ® (polyamide-imide) commercialisé par Solvay, etc. La résine aura avantageusement une température de transition vitreuse ou de ramollissement supérieure à 180°C, voire beaucoup plus.

Les particules abrasives de grande dureté sont par exemple des carbures, du diamant, etc. On citera par exemple les carbures de silicium, de tungstène, de bore, les alumines, le chrome, le corindon, les poudres de diamant (naturel ou synthétique), et les mélanges de ces particules.

On a remarqué que la présence de particules minérales à base de calcium et/ou de magnésium et/ou d'aluminium (en particulier à base de calcium et/ou de magnésium) permettait d'améliorer la résistance au ramollissement de la couche, et donc le déchaussement des particules abrasives présentes ou attachées à la couche de résine. On citera en particulier comme particules minérales, les carbonates, les hydroxydes, les chlorures, les suphates, etc., la bohémite, les alumino-silicates, le mica et le kaolin, etc.

La couche de résine décrite ci-avant (sans ou avec métal déployé) peut être utilisée entre deux panneaux de fibres (par cellulosiques), entre deux tôles métalliques, entre un panneau de fibres et une tôle métallique. La couche de métal déployé aurait également pû être insérée entre deux couches de résine résistant à la température (couches de résine ne comprenant pas de métal déployé) a par exemple une épaisseur de 3 à 20mm, en particulier de 3 à 6mm.

Le métal déployé, avantageusement aplati, 40 est recouvert sensiblement totalement le long de ses deux faces opposées par des panneaux de fibres (avantageusement au moins partiellement cellulosiques) 20, avec ou sans interposition d'une couche de résine chargée en particules abrasives.

Des points de colle 70 servent de moyens de liaison de l'ensemble E sur le fond 12 de la cuvette, de la tôle 50 et de la tôle 30 avec des panneaux 20.

La troisième tôle 50 en acier a une épaisseur comprise entre 1 et 5mm, avantageusement entre 1,5mm et 4mm, dont les bords 51 sont pliés de manière à definir une cuvette avec un fond. La quatrième tôle 60 en acier d'épaisseur comprise entre 1 et 5mm, avantageusement entre 1,5mm et 4mm, dont les bords 61 sont pliés de manière à définir une cuvette avec un fond.

La cuvette de la quatrième tôle 60 contient un panneau 20 et la deuxième tôle 30. La cuvette de la quatrième tôle est placée sur le fond de la cuvette de la troisième tôle 50 avec interposition d'un panneau 20. La cuvette de la troisième tôle 50 est placée dans la cuvette de la première tôle 10 avec interposition de l'ensemble E comprenant le métal déployé 30.

Les bords pliés des tôles 10, 50 et 60 sont adjacents et sont attachés les uns aux autres au moyen de points de soudure 80 ou de colle.

Les bords pliés des tôles s'étendent au-delà de la deuxième tôle 30 et présentent des ouvertures alignées 90 adaptées pour recevoir la tige d'un boulon 91.

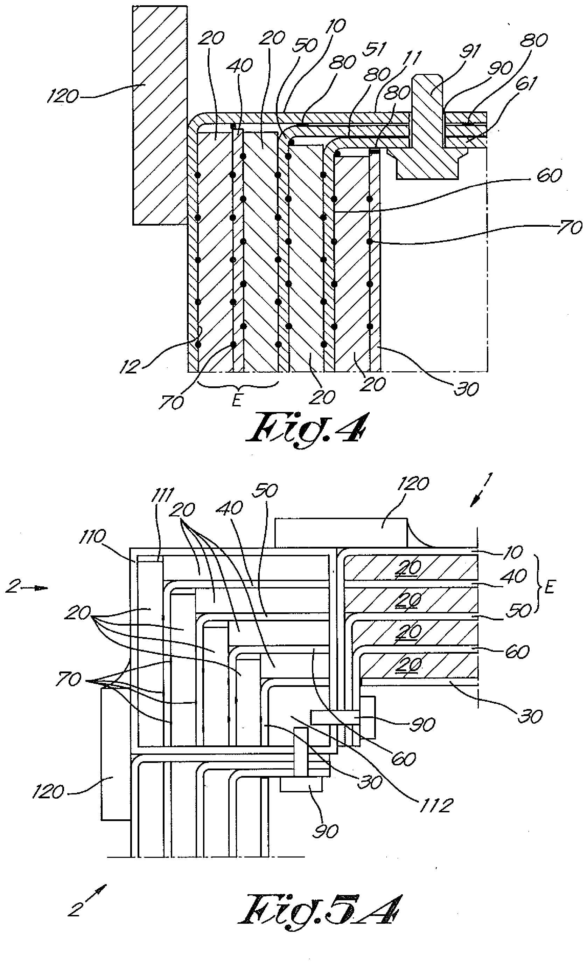

La figure 5A montre en coupe un poteau 2 adapté pour relier deux cloisons 1 adjacentes. Le poteau 2 comprend un profilé creux 110 en acier d'épaisseur comprise entre 1 et 5mm, de section ouverte intérieure sensiblement carrée ou rectangulaire de surface comprise entre 30 à 100mm sur 30 à 100mm. Un ensemble E formé par un métal déployé en acier 30 (avantageusement aplati) courbé associé le long de ses deux faces au moyen de colle à des morceaux de panneau 20 à base de fbres (avantageusement au moins partiellement cellulosiques), ledit ensemble E étant inséré dans ledit creux du profilé 111 et épousant sensiblement deux côtés adjacents du profilé.

L'ensemble E inséré dans le creux du profilé 111 est associé à au moins deux tôles 30,50,60 pliées supplémentaires et à au moins des morceaux de panneau 20 de fibres cellulosique placés entre les tôles pliées supplémentaires 30,50,60.

L'ensemble associé avantageusement à des tôles pliées avec interposition de morceaux de panneau 20 de fibres (avantageusement au moins partiellement cellulosiques) laisse un espace libre ou un vide 112 dans le creux rempli d'air. Ce vide 112 est destiné à recevoir l'extrémité des boulons.

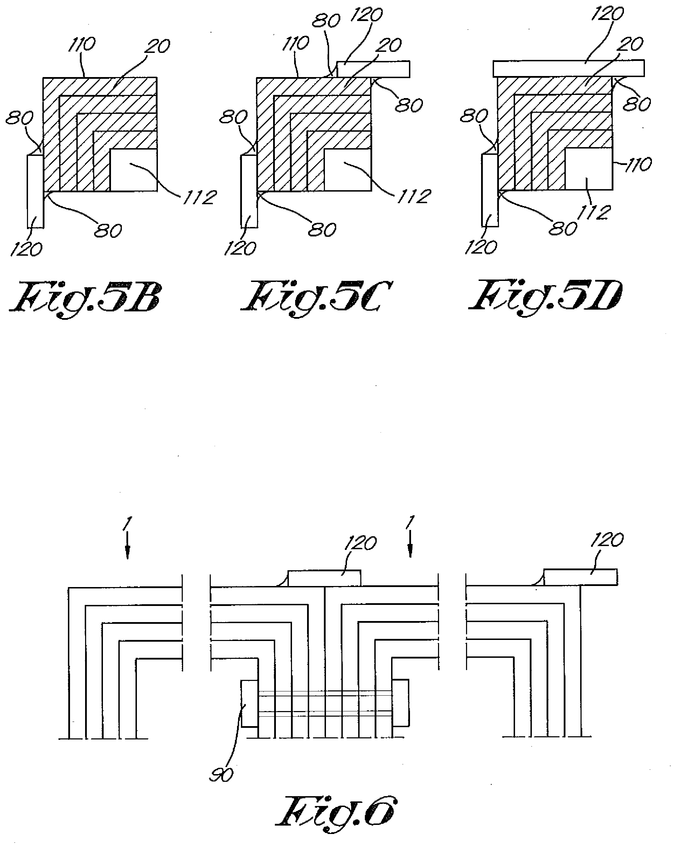

Les figures 5B, 5C et 5D sont des vues de pôteaux similaires à celui de la figure 5A, si ce n'est que le pôteau de la figure 5A est associé (par un ou des cordons de soudure 80) à un ou des plats 120 de haute dureté, par exemple de dureté supérieure à 400HB (épaisseur de 6 à 10mm). Un tel plat 120 peut également être associé à la tôle 10.

La figure 6 montre deux cloisons attachées directement l'une à l'autre au moyen de boulons 90, et avantageusement de points de colle situés entre les bords pliés 11 des tôles 10 placés l'un contre l'autre.

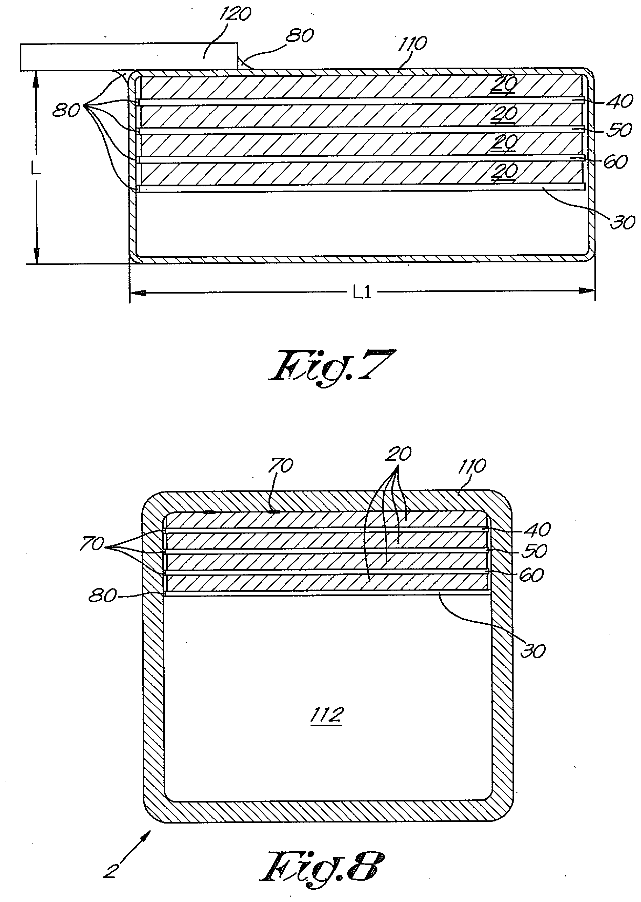

La figure 7 est une vue en coupe d'une cloison 1 adaptée pour servir de couverture pour toit. Cette cloison a un profilé creux 110 (définissant un creux ou cuvette fermée) recevant une série de panneaux MDF séparés les uns des autres par une tôle 50.60 et/ou un métal déployé 40 et/ou une ou des couches de résine chargées en particules abrasives. Une tôle 30 recouvre le dernier panneau 20 (MDF), évantuellement avec interposition d'une couche de résine chargée de particules abrasives (servant avantageusement de couche de colle). Les tôles sont planes et avantageusement soudées à la face intérieure du profilé métallique 110.

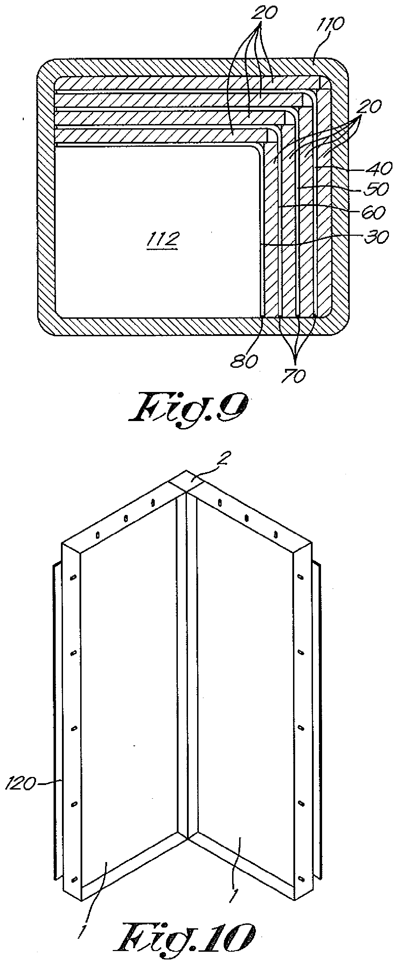

Les figures 8 et 9 sont des vues en coupe de poteaux comprenant un profilé creux définissant une cuvette recevant recevant une série de panneaux MDF séparés les uns des autres par une tôle 50.60 ou un métal déployé 40 (plié ou non). Ces pôteaux ont par exemple une section sensiblement carrée ou rectangulaire de côté compris entre 6 et 15 cm. L'épaisseur du profilé creux est par exemple compris entre 5mm et 12mm.

La figure 10 montre en perspective deux cloisons 1 reliées par un pôteau 2.

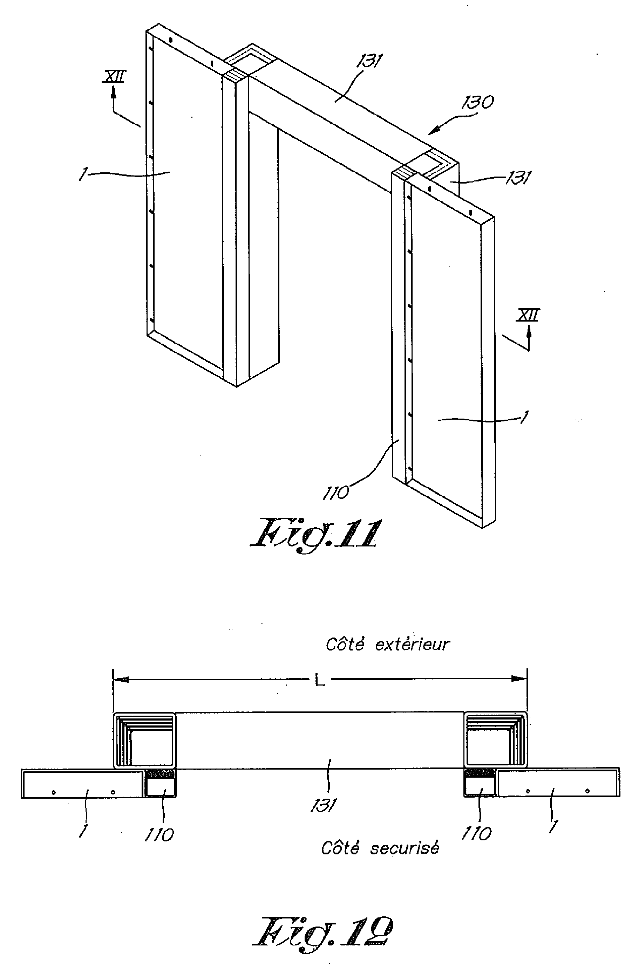

La figure 11 est une vue en perspective montrant l'association d'un cadre 130 (par exemple d'une porte blindée) avec deux cloisons suivant l'invention 1. Les tubes verticaux et horizontal 131 du cadre sont des profilés du type représentés aux figures 8 et 9. Les profilés verticaux 131 prennent appui en partie sur la cloison 1 et en partie sur un pôteau 110. Des points ou cordons de soudure 80 s'étendent avantageusement entre le cadre 130 et les cloisons 1 et les pôteaux 110.

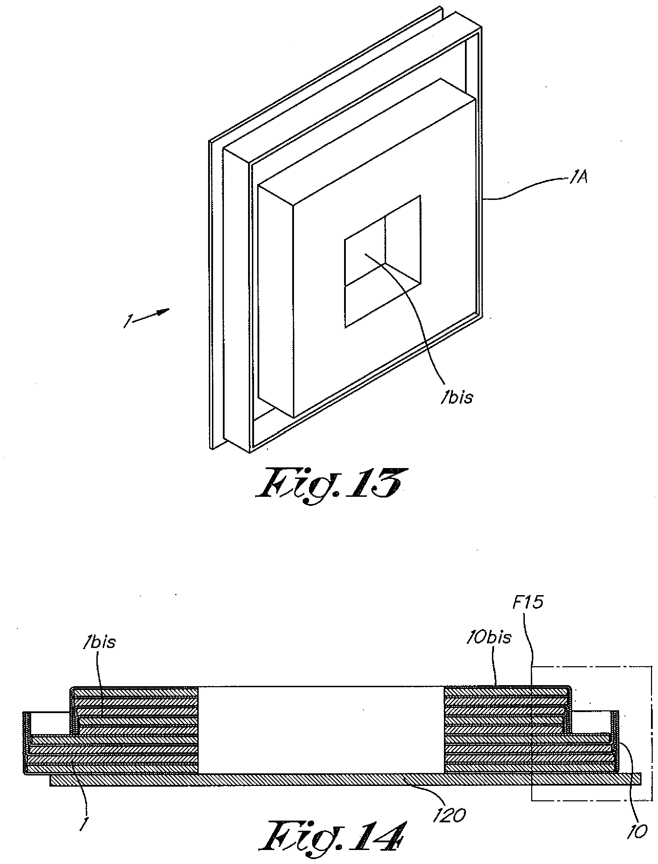

La figure 13 montre une cloison 1 présentant une ouverture 1A. Pour accroître la résistance de la paroi autour de l'ouverture, la cloison 1 est associée du côté protégé par une cloison 1bis inversée de structure similaire à celle de la cloison 1. La tôle pliée 10bis a ses extrémités par exemple soudées à la tôle 30 s'étendant dans la cuvette formée par les bords 11 de la tôle 10. Avantageusement un panneau en MDF 20 est placé entre les tôles 30 des cloisons 1 et 1bis.

## Revendications

1. Paroi ou cloison pour une enceinte résistante à au moins une agression mécanique, ladite paroi ou cloison comprenant :
- une première tôle en acier (10) sensiblement pleine d'épaisseur comprise entre 2 et 5mm et dont les bords latéraux (11) sont pliés pour définir une cuvette avec un fond, lesdits bords latéraux pliés étant avantageusement soudés les uns aux autres ;
- une série de panneaux (20) comprenant au moins des fibres (avantageusement au moins partiellement cellulosiques) et un liant, lesdits panneaux présentant une densité d'au moins 600kg/m³ et une épaisseur comprise entre 3 et 15mm,
- au moins une deuxième tôle en acier (30) sensiblement pleine d'épaisseur comprise entre 2 et 5mm, et
- au moins une couche de métal déployé en acier (40) d'épaisseur apparente comprise entre 2 et 20mm, avantageusement de 2 à 8mm, avec un maillage avec une diagonale courte (41) de 10 à 40mm, avantageusement de 20 à 30mm, sur une diagonale longue (42) de 15 à 80mm, avantageusement de 40 à 60mm, mais supérieure à la diagonale courte (41), défini par des lanières (43) de largeur comprise entre 2 et 10mm, avantageusement de 3 à 7mm, ladite couche (40) présentant une surface de passage ouverte égale à 30 à 80% de la surface totale formée par les lanières et la surface de passage ouverte,
dans lequel la couche de métal déployé (40) est située entre un premier panneau de fibres (avantageusement au moins partiellement cellulosiques) (20) et un deuxième panneau de fibres (avantageusement au moins partiellement cellulosiques) (20) pour former un ensemble (E) comprenant le métal déployé (40), et dans lequel ledit ensemble (E) est situé dans ladite cuvette de la première tôle (10) entre ledit fond (12) et ladite deuxième tôle en acier (30) également située dans ladite cuvette de la première tôle (10).

2. Paroi ou cloison suivant la revendication 1, **caractérisée en ce que** la couche de métal déployé (40) est une couche de métal déployé aplati (40) avec une épaisseur apparente de 2 à 6mm avec un maillage avec une diagonale courte (41) de 15 à 30mm sur une diagonale longue (42) de 35 à 60mm, défini par des lanières (43) de largeur comprise entre 3 et 6mm, ladite couche de métal déployé aplati (40) étant située entre (a) un premier panneau (20) comprenant au moins des fibres (avantageusement au moins partiellement cellulosiques) et un liant, ledit premier panneau (20) présentant une densité de 700 à 1000kg/m³ et une épaisseur comprise entre 5 et 10mm, et (b) un deuxième panneau (20) comprenant au moins des fibres (avantageusement au moins partiellement cellulosiques) et un liant, ledit deuxième panneau présentant une densité de 700 à 1000kg/m³ et une épaisseur comprise entre 5 et 10mm,
ladite couche de métal déployé aplati (40) étant attachée auxdits premier et deuxième panneaux au moyen de points ou zones ou couche(s) de colle (70), en particulier de colle choisie parmi les colles époxy, silicone, polyuréthanes ou polymères hybrides, de préférence epoxy ou polyuréthanne-silicone.

3. Paroi ou cloison suivant la revendication 2, **caractérisée** en que la couche de métal déployé aplati (40) définit entre lesdits premier et deuxième panneaux (20) une ou des chambres remplie d'air.

4. Paroi ou cloison selon l'une queconque des revendications précédentes, **caractérisée en ce que** la couche de métal déployé aplati comprend une résine, avantageusement du type époxy, chargée au moins en particules abrasives de granulométrie de moins de 2mm, en particulier de moins de 1mm, et présentant une dureté sur l'échelle de Mohs supérieure à 8, en particulier supérieure à 9, et en un additif du type particules minérales à base de calcium et/ou de magnésium et/ou d'aluminium, de granulométrie inférieure à 2mm, en particulier inférieure à 1mm, le rapport en poids particules abrasives / résine étant avantageusement compris entre 1 : 1 et 6 : 1.

5. Paroi ou cloison suivant l'une quelconque des revendications 1 à 4, **caractérisée en ce que** le métal déployé (40), avantageusement aplati, avantageusement partiellement noyé dans une couche de résine comprenant des particules abrasives, est recouvert sensiblement totalement le long de ses deux faces opposées par des panneaux de fibres (avantageusement au moins partiellement cellulosiques) (20).

6. Paroi ou cloison suivant l'une quelconque des revendications 1 à 5, **caractérisée en ce qu'**un panneau de fibres (avantageusement au moins partiellement cellulosiques) (20) d'un ensemble (E) comprenant un métal déployé (40) prend appui sur le fond (12) de la cuvette de la première tôle (10) avec interposition de points ou zones de colle (70), en particulier choisie parmi les colles epoxy, silicone, polyuréthanes ou polymères hybrides, de préférence époxy et polyuréthanne-silicone.

7. Paroi ou cloison suivant l'une quelconque des revendications précédentes, **caractérisée en ce qu'**elle comprend au moins une troisième tôle (50) en acier d'épaisseur comprise entre 1 et 5mm, avantageusement entre 1,5mm et 4mm, dont les bords (51) sont pliés de manière à définir une cuvette avec un fond, **en ce que** l'ensemble (E) avec métal déployé (40) est situé entre le fond de la cuvette formée par la première tôle (10) et la troisième tôle (50), **en ce que** les bords pliés (51) de la troisième tôle (50) s'étendent respectivement le long des bords pliés de la première tôle (10), **en ce que** la deuxième tôle (30) en acier sensiblement pleine d'épaisseur comprise entre 2 et 5mm s'étend dans la cuvette formée par la troisième tôle (50), et
**en ce que** lesdits premier et deuxième panneaux (20) de l'ensemble (E) avec métal déployé (40) sont de préférence respectivement attachés au fond de la cuvette de la première tôle (10) et à la troisième tôle (50) au moyen de points ou zones ou couches de colle (70), en particulier choisie parmi les colles époxy, silicone, polyuréthanes ou polymères hybrides, de préférence époxy, polyuréthanne-silicone.

8. Paroi ou cloison suivant la revendication précédente, **caractérisée en ce qu'**entre la deuxième tôle (30) et le fond de la cuvette formée par la troisième tôle (50) s'étend au moins un panneau (20) comprenant au moins des fibres (avantageusement au moins partiellement cellulosiques) et un liant, ledit panneau présentant une densité d'au moins 600kg/m³, de préférence de 700 à 1000kg/m³, et une épaisseur comprise entre 3 et 15mm, de préférence de 5 à 10mm), dont une face est attachée au moyen de points ou zones de colle (70) à la deuxième tôle (30) et/ou au fond de la cuvette formée par la troisième tôle (50), ladite colle étant avantageusement choisie parmi les colles époxy, silicone, polyuréthanes ou polymères hybrides, de préférence époxy et polyuréthanne-silicone.

9. Paroi ou cloison suivant la revendication précédente, **caractérisée en ce qu'**elle comprend au moins une quatrième tôle (60) en acier d'épaisseur comprise entre 1 et 5mm, avantageusement entre 1,5m et 4mm, dont les bords (61) sont pliés de manière à definir une cuvette avec un fond, **en ce que** ladite quatrième tôle (60) prend appui avec interposition d'au moins un panneau (20) comprenant au moins des fibres (avantageusement au moins partiellement cellulosiques) et un liant, ledit panneau (20) présentant une densité d'au moins 600kg/m³, de préférence de 700 à 1000kg/m³, et une épaisseur comprise entre 3 et 15mm, de préférence de 5 à 10mm, sur le fond de la cuvette formée par la troisième tôle (50), et **en ce que** ledit panneau (20) est attaché à ladite troisième tôle (50) et à la dite quatrième tôle (60) au moyen de points ou zones de colle (70), ladite colle étant avantageusement choisie parmi les colles époxy, silicone, polyuréthanes ou polymères hybrides, de préférence époxy et polyuréthanne-silicone,
les bords pliés des première, troisième et quatrième tôles s'étendent de préférence les uns à côtés des autres et sont de préférence attachés les uns aux autres par des points de colle ou de soudure ou des zones ou couches de colle ou de soudure.

10. Paroi ou cloison suivant l'une quelconque des revendications précédentes, **caractérisée en ce que** la première tôle (10) est associée sur sa face opposée à celle formant la cuvette à au moins un plat (120) en acier de dureté supérieure à 300HB, ledit plat surplombant au moins un bord plié de la première: tôle (10).

11. Enceinte résistante à une agression mécanique et à une agression thermique, ladite enceinte comprenant au moins une juxtaposition de panneaux ou cloisons selon l'une quelconque des revendications précédentes.

12. Enceinte selon la revendication précédente comportant en outre un des pôteaux (2) pour relier deux panneaux ou cloisons, en particulier s'étendant dans des plans, en particulier verticaux, inclinés entre eux.

13. Enceinte suivant la revendication précédente, **caractérisée en ce que** le ou les pôteaux (2) comprennent un profilé creux (110) avantageusement fermé en acier d'épaisseur comprise entre 1 et 5mm, avantageusement de 2 à 4mm, de section ouverte intérieure sensiblement carrée ou rectangulaire de surface comprise entre 30 à 200mm (avantageusement de 60 à 120mm) sur 30 à 200mm (avantageusement de 60 à 120mm), **en ce qu'**un ensemble (E) formé par un métal déployé (40) en acier, avantageusement courbé, associé le long de ses deux faces au moyen de colle (70) à des morceaux de panneau (20) à base de fibres (avantageusement au moins partiellement cellulosiques), ledit ensemble (E) étant inséré dans ledit creux du profilé au moins le long d'un côté du profilé (110), avantageusement pour au moins épouser sensiblement deux côtés adjacents du profilé (110).

14. Enceinte suivant la revendication précédente, **caractérisée en ce que** l'ensemble (E) inséré dans le creux du profilé (110) est associé à au moins deux tôles, avantageusement pliées, supplémentaires (30,50,60) et à au moins des morceaux de panneau de fibres (avantageusement au moins partiellement cellulosiques) placés entre les deux tôles, avantageusement pliées, supplémentaires, l'ensemble associé avantageusement à des tôles pliées avec interposition de morceaux de panneau de fibres (avantageusement au moins partiellement cellulosiques) laissant avantageusement un espace libre ou un vide dans le creux rempli d'air.

15. Enceinte suivant l'une des revendications 13 et 14, **caractérisée en ce que** les morceaux de panneau proviennent d'un panneau (20) comprenant au moins des fibres (avantageusement au moins partiellement cellulosiques) et un liant, lesdits panneaux présentant une densité d'au moins 600kg/m³, avantageusement de 700 à 1000kg/m³, et une épaisseur comprise entre 3 et 15mm, avantageusement de 4 à 8mm, et que le métal déployé en acier (40), de préférence aplati, présente une épaisseur apparente comprise entre 2 et 20mm, avantageusement de 2 à 6mm, avec un maillage avec une diagonale courte (41) de 10 à 40mm, avantageusement de 20 à 30mm, sur une diagonale longue (42) de 15 à 80mm, avantageusement de 40 à 60mm, mais supérieure à la diagonale courte (41), défini par des lanières (43) de largeur comprise entre 2 et 10mm, avantageusement de 3 à 6mm, ladite couche présentant une surface de passage ouverte égale à 30 à 80% de la surface totale formée par les lanières et la surface de passage ouverte, ledit métal déployé (40) étant de préférence du type aplati.

## Patentansprüche

1. Wand oder Trennwand für eine Umhüllung, die mindestens einer mechanischen Beanspruchung standhält, wobei die Wand oder Trennwand umfasst:
- ein erstes im Wesentlichen massives Stahlblech (10) mit einer zwischen 2 und 5 mm enthaltenen Dicke und mit gebogenen Seitenkanten (11), um ein Becken mit einem Boden zu definieren, wobei die besagten gebogenen Seitenkanten vorteilhafterweise miteinander verschweißt sind;
- eine Reihe von Platten (20) mit mindestens (vorteilhafterweise mindestens teilweise cellulosehaltigen) Fasern und einem Bindemittel, wobei die besagten Platten eine Dichte von mindestens 600 kg/m³ und eine zwischen 3 und 15 mm enthaltene Dicke;
- mindestens ein zweites, im Wesentlichen massives, zwischen 2 und 5 mm dickes Stahlblech (30) aufweisen, und
- mindestens eine Streckmetallschicht aus Stahl (40) mit einer augenscheinlichen Dicke zwischen 2 und 20 mm, vorteilhafterweise zwischen 2 und 8 mm, mit einem Gitter mit einer kurzen Diagonale (41) von 10 bis 40 mm, vorteilhafterweise von 20 bis 30 mm, auf einer langen Diagonale (42) von 15 bis 80 mm, vorteilhafterweise 40 bis 60 mm, jedoch größer als die kurze Diagonale (41), definiert durch Bänder (43) mit einer Breite zwischen 2 und 10 mm, vorteilhafterweise von 3 bis 7 mm, wobei die Schicht (40) eine offene Durchgangsfläche von 30 bis 80% der Gesamtfläche aufweist, die durch die Bänder und die offene Durchgangsfläche gebildet wird, wobei die Streckmetallschicht (40) zwischen einer ersten (vorteilhafterweise mindestens teilweise cellulosehaltigen) Faserplatte (20) und einer zweiten (vorteilhafterweise mindestens teilweise cellulosehaltigen) Faserplatte (20) angeordnet ist, um eine das Streckmetall (40) umfassende Einheit (E) zu bilden, und wobei die Einheit (E) in dem Becken des ersten Stahlblechs (10) zwischen dem Boden (12) und dem zweiten Blech (30) angeordnet ist, das ebenfalls in dem Becken des ersten Blechs (10) befindlich ist.

2. Wand oder Trennwand nach Anspruch 1, **dadurch gekennzeichnet, dass** die Streckmetallschicht (40) eine abgeflachte Streckmetallschicht (40) mit einer augenscheinlichen Dicke von 2 bis 6 mm mit einem Gitter mit einer kurzen Diagonale (41) von 15 bis 30 mm auf einer langen Diagonale (42) von 35 bis 60 mm ist, definiert durch Bänder (43) zwischen 3 und 6 mm einer enthaltenen Breite, wobei die besagte abgeflachte Streckmetallschicht (40) zwischen (a) einer ersten Platte (20) mit mindestens (vorteilhafterweise mindestens teilweise cellulosehaltiger) Fasern und einem Bindemittel angeordnet ist, die erste Platte (20) eine Dichte von 700 bis 1000 kg/m³ und eine Dicke zwischen 5 und 10 mm aufweist, und (b) einer zweiten Platte (20) mit mindestens (vorteilhafterweise mindestens teilweise cellulosehaltiger) Fasern und einem Bindemittel, wobei die zweite Platte eine Dichte von 700 bis 1000 kg/m³ und eine Dicke zwischen 5 und 10 mm aufweist,
die abgeflachte Streckmetallschicht (40) an der ersten und der zweiten Platte mittels Klebepunkten oder -zonen oder -schichten (70) befestigt ist, insbesondere eines Klebstoffs, der aus Epoxid-, Silikon-, Polyurethan- oder Hybridpolymerklebstoffen, vorzugsweise Epoxid oder Polyurethan-Silikon ausgewählt wird.

3. Wand oder Trennwand nach Anspruch 2, **dadurch**
**gekennzeichnet dass** die abgeflachte Streckmetallschicht (40) zwischen der ersten und der zweiten Platte (20) eine oder mehrere mit Luft gefüllte Kammern definiert.

4. Wand oder Trennwand nach einem der vorangehenden Ansprüche, **dadurch gekennzeichnet, dass** die abgeflachte Streckmetallschicht ein Harz, vorteilhafterweise des Typs Epoxid, umfasst, das mit mindestens abrasiven Teilchen mit einer Teilchengröße von weniger als 2 mm, insbesondere weniger als 1 mm, beladen ist und eine Härte auf der Mohs-Skala von größer als 8, insbesondere größer als 9 und einen Zusatz des Typs Mineralpartikel auf der Basis von Calcium und/oder Magnesium und/oder Aluminium mit einer Teilchengröße von weniger als 2 mm, insbesondere weniger als 1 mm, aufweist, wobei das Gewichtsverhältnis abrasive Partikel/Harz vorteilhafterweise zwischen 1:1 und 6:1 enthalten ist.

5. Wand oder Trennwand nach einem der Ansprüche 1 bis 4, **dadurch gekennzeichnet, dass** das vorteilhafterweise abgeflachte und vorteilhafterweise teilweise in eine abrasive Partikel umfassende Harzschicht eingebettete Streckmetall (40) entlang seiner beiden gegenüberliegenden Seiten mit (vorteilhafterweise mindestens teilweise cellulosehaltigen) Faserplatten (20) im Wesentlichen vollständig bedeckt ist.

6. Wand oder Trennwand nach einem der Ansprüche 1 bis 5, **dadurch gekennzeichnet, dass** eine (vorteilhafterweise mindestens teilweise cellulosehaltige) Faserplatte (20) auf einer Einheit (E) mit einem Streckmetall (40) auf dem Boden (12) des Beckens des ersten Blechs (10) mit einer Zwischenlage von Klebepunkten oder -zonen (70) aufliegt, insbesondere ausgewählt aus Epoxid-, Silikon-, Polyurethan- oder Hybridpolymerklebstoffen, vorzugsweise Epoxid oder Polyurethan-Silikon.

7. Wand oder Trennwand nach einem der vorangehenden Ansprüche, **dadurch gekennzeichnet, dass** sie mindestens ein drittes Stahlblech (50) umfasst, mit einer Dicke zwischen 1 und 5 mm, vorteilhafterweise zwischen 1,5 mm und 4 mm, dessen Kanten (51) so gebogen sind, dass sie ein Becken mit einem Boden definieren, die Einheit (E) mit Streckmetall (40) zwischen dem Boden des Beckens, der durch das erste Blech (10) gebildet wird, und dem dritten Blech (50) angeordnet ist, sich die gebogenen Kanten (51) des dritten Blechs (50) jeweils entlang der gebogenen Kanten des ersten Blechs (10) erstrecken, sich das zweite Blech (30) aus im Wesentlichen massivem Stahl mit einer Dicke zwischen 2 und 5 mm in dem durch das dritte Blech (50) gebildeten Becken erstreckt und
die ersten und zweiten Platten (20) der Einheit (E) mit Streckmetall (40) vorzugsweise jeweils am Boden des Beckens der ersten Platte (10) und an der dritten Platte (50) mittels Klebepunkten oder -zonen oder -schichten (70) befestigt sind, insbesondere ausgewählt aus Epoxid-, Silikon-, Polyurethan- oder Hybridpolymeren, vorzugsweise Epoxid-, Polyurethan-Silikonklebstoffen.

8. Wand oder Trennwand nach dem vorangehenden Anspruch, **dadurch gekennzeichnet, dass** sich zwischen dem zweiten Blech (30) und dem Boden des von dem dritten Blech (50) gebildeten Beckens mindestens eine Platte (20) mit mindestens (vorteilhafterweise mindestens teilweise cellulosehaltigen) Fasern und einem Bindemittel erstreckt, die Platte eine Dichte von mindestens 600 kg/m³, vorteilhafterweise von 700 bis 1000 kg/m³, und eine Dicke zwischen 3 und 15 mm, vorteilhafterweise von 5 bis 10 mm, aufweist, wovon eine Seite mittels Klebepunkten oder -zonen (70) an dem zweiten Blech (30) und/oder am Boden des von dem dritten Blech gebildeten Becken (50) befestigt ist und der Klebstoff vorteilhafterweise aus Epoxid-, Silikon-, Polyurethan- oder Hybridpolymeren, vorzugsweise Epoxid-, Polyurethan-Silikonklebstoffen ausgewählt wird.

9. Wand oder Trennwand nach dem vorangehenden Anspruch, **dadurch gekennzeichnet, dass** sie mindestens ein viertes Stahlblech (60) mit einer zwischen 1 und 5 mm, vorteilhafterweise zwischen 1,5 mm und 4 mm enthaltenen Dicke umfasst, wovon die Kanten (61) so gebogen sind, um ein Becken mit einem Boden zu defieren, das vierte Blech (60) mit einer Zwischenlage mindestens einer Platte (20) mit mindestens (vorteilhafterweise mindestens teilweise cellulosehaltigen) Fasern und einem Bindemittel aufliegt, die Platte (20) eine Dichte von mindestens 600 kg/m³, vorteilhafterweise von 700 bis 1000 kg/m³ und eine Dicke zwischen 3 und 15 mm, vorteilhafterweise von 5 bis 10 mm, am Boden des von dem dritten Blech (50) gebildeten Becken aufweist, und dadurch, dass die Platte (20) am dritten Blech (50) und am vierten Blech (60) mittels Klebepunkten oder -zonen (70) befestigt ist, wobei der Klebstoff vorteilhafterweise aus Epoxid-, Silikon-, Polyurethan- oder Hybridpolymeren, vorzugsweise Epoxid-, Polyurethan-Silikonklebstoffen gewählt wird,
sich die gebogenen Kanten des ersten, dritten und vierten Blechs vorteilhafterweise nebeneinander erstrecken und vorteilhafterweise mit Klebe- oder Schweißpunkten oder -zonen oder Klebe- oder Schweißschichten miteinander verbunden sind.

10. Wand oder Trennwand nach einem der vorangehenden Ansprüche, **dadurch gekennzeichnet, dass** das erste Blech (10) an seiner zu derjenigen das Becken bildenden gegenüberliegenden Seite mindestens einer Stahlplatte (120) mit einer höheren Härte als 300 HB zugeordnet ist und die Platte mindestens eine gebogene Kante des ersten Blechs (10) überragt.

11. Umhüllung, die einer mechanischen Beanspruchung und einer thermischen Beanspruchung standhält, wobei die Umhüllung mindestens eine Aneinanderreihung von Wänden oder Trennwänden nach einem der vorangehenden Ansprüche umfasst.

12. Umhüllung nach dem vorangehenden Anspruch mit zudem einem der Pfosten (2) zum Verbinden zweier Wände oder Trennwände, die sich insbesondere in Ebenen, die insbesondere senkrecht, untereinander geneigt sind, erstrecken.

13. Umhüllung nach dem vorangehenden Anspruch, **dadurch gekennzeichnet, dass** der oder die Pfosten (2) ein vorteilhafterweise geschlossenes Hohlprofil (110) aus Stahl mit einer Dicke zwischen 1 und 5 mm, vorteilhafterweise von 2 bis 4 mm, umfasst, mit einem im Wesentlichen quadratischen oder rechteckigen inneren offenen Querschnitt mit einer zwischen 30 bis 200 mm (vorteilhafterweise von 60 bis 120 mm) auf 30 bis 200 mm (vorteilhafterweise von 60 bis 120 mm) enthaltenen Fläche, eine aus einem Stahlstreckmetall (40) gebildete, vorteilhafterweise gekrümmte Einheit (E) entlang ihrer beiden Seiten mittels Klebstoff (70) mit (vorteilhafterweise mindestens teilweise cellulosehaltiger) faserbasierter Plattenstücke (20) verbunden ist und die Einheit (E) zumindest entlang einer Seite des Profils (110) in den Hohlraum des Profils eingeführt wird, um vorteilhafterweise wenigstens zwei benachbarte Seiten des Profils (110) im Wesentlichen zu verbinden.

14. Umhüllung nach dem vorangehenden Anspruch, **dadurch gekennzeichnet, dass** die in den Hohlraum des Profils (110) eingefügte Einheit (E) mit mindestens zwei, vorteilhafterweise gebogenen, zusätzlichen Blechen (30, 50, 60) und mit mindestens Teilen (vorteilhafterweise mindestens teilweise cellulosehaltiger) Faserplatten verbunden ist, die zwischen den beiden vorteilhafterweise gebogenen zusätzlichen Blechen angeordnet sind, wobei die vorteilhafterweise mit dazwischenliegenden gebogenen Blechen mit einer Zwischenlage von Teilen von (vorteilhafterweise mindestens teilweise cellulosehaltiger) Faserplatten verbundene Einheit vorteilhafterweise einen Frei- oder Leerraum in dem luftgefüllten Hohlraum lässt.

15. Umhüllung nach einem der Ansprüche 13 und 14, **dadurch gekennzeichnet, dass** die aus einer Platte (20) stammenden Plattenteile mindestens (vorteilhafterweise mindestens teilweise cellulosehaltige) Fasern und ein Bindemittel enthalten, die Platten eine Dichte von mindestens 600 kg/m³, vorteilhafterweise von 700 bis 1000 kg/m³ und eine Dicke zwischen 3 und 15 mm, vorteilhafterweise von 4 bis 8 mm, aufweisen und das vorteilhafterweise abgeflachte Stahlstreckmetall (40) eine augenscheinliche Dicke zwischen 2 und 20 mm, vorteilhafterweise von 2 bis 6 mm aufweist, mit einem Gitter mit einer kurzen Diagonale (41) von 10 bis 40 mm, vorteilhafterweise von 20 bis 30 mm, auf einer langen Diagonale (42) von 15 bis 80 mm, vorteilhafterweise von 40 bis 60 mm, jedoch größer als die kurze Diagonale (41), definiert durch Bänder (43) mit einer zwischen 2 und 10 mm enthaltenen Breite, vorteilhafterweise von 3 bis 6 mm, die Schicht eine offene Durchgangsfläche von 30 bis 80% der Gesamtfläche aufweist, die durch die Bänder und die offene Durchgangsfläche gebildet wird, wobei das Streckmetall (40) vorteilhafterweise abgeflachten Typs ist.

## Claims

1. Wall or partition for an enclosure resistant to at least one mechanical aggression, said wall or partition comprising:
- a first substantially full steel sheet (10) with a thickness of between 2 and 5 mm and of which the lateral edges (11) are folded to form a basin with a bottom, said folded lateral edges being advantageously welded to one another;
- a series of panels (20) including at least fibres (advantageously at least partially cellulosic) and a binder, the aforementioned panels presenting a density of at least 600 kg/m³ and a thickness between 3 and 15 mm,
- at least a second steel sheet (30) substantially full, with a thickness 2 and 5 mm, and
- at least one layer of expanded metal in steel (40) with an apparent thickness ranging between 2 and 20 mm, advantageously between 2 and 8 mm, the mesh having a short diagonal (41) ranging between 10 to 40 mm, advantageously between 20 and 30 mm, and a long diagonal (42) ranging between 15 and 80 mm, advantageously between 40 and 60 mm, but greater than the short diagonal (41), defined by straps (43) with a width included between 2 and 10 mm, advantageously between 3 and 7 mm, the aforementioned layer (40) presenting an open passage area equal to 30 to 80% of the total area formed by the straps and the open passage area,
in which the layer of expanded metal (40) is located between a first fibre panel (advantageously at least partially cellulosic) (20) and a second fibre panel (advantageously at least partially cellulosic) (20) to form an entity (E) including the expanded metal (40), and in which the aforementioned entity (E) is located in the aforementioned basin of the first sheet (10) between the aforementioned bottom (12) and the aforementioned second steel sheet (30) also located in the aforementioned basin of the first sheet (10).

2. Wall or partition according to claim 1, **characterized in that** the layer of expanded metal (40) is a flattened layer of expanded metal (40) with an apparent thickness ranging between 2 and 6 mm, the mesh having a short diagonal (41) between 15 and 30 mm on a long diagonal (42) between 35 and 60 mm, defined by straps (43) with a thickness ranging between 3 and 6 mm, the aforementioned layer of flattened expanded metal (40) being located between (a) one first panel (20) including at least fibres (advantageously at least partially cellulosic) and a binder, the aforementioned first panel (20) presenting a density ranging between 700 and 1000 kg/m³ and a thickness ranging between 5 and 10 mm, and (b) a second panel (20) including at least fibres (advantageously at least partially cellulosic) and a binder, the aforementioned second panel presenting a density ranging between 700 and 1000 kg/m³ and a thickness ranging between 5 and 10 mm,
the aforementioned layer of flattened expanded metal (40) being attached to the aforementioned first and second panels by means of dots, areas or layer(s) of glue (70), especially glue chosen among epoxy, silicone, polyurethane or hybrid polymer glues, preferably epoxy or polyurethane-silicone glues.

3. Wall or partition according to claim 2, **characterized in that** the layer of flattened expanded metal (40) defines one or several air chambers between the aforementioned first and second panels (20).

4. Wall or partition according to anyone of the preceding claims, **characterized in that** the layer of flattened expanded metal contains a resin, advantageously of the epoxy type, charged at least with abrasive particles with a particle size of less than 2 mm, especially of less than 1 mm, and presenting a hardness score on the Mohs scale higher than 8, especially higher than 9 and an additive of the mineral particle type, based on calcium and / or magnesium and / or aluminium, with a particle size of less than 2 mm, especially of less than 1 mm, the weight ratio abrasive particles / resin being advantageously between 1:1 and 6:1.

5. Wall or partition according to anyone of the claims 1 to 4, **characterized in that** the expanded metal (40), advantageously flattened, advantageously partially drowned in a layer of resin containing abrasive particles, is substantially covered, over the total length of its two opposite sides by fibre panels (advantageously at least partially cellulosic) (20).

6. Wall or partition according to anyone of the claims 1 to 5, **characterized in that** a fibre panel (advantageously at least partially cellulosic) (20) of an entity (E) comprising a layer of expanded metal (40) leans on the bottom (12) of the basin of the first sheet (10) with interposition of dots, areas or layer(s) of glue (70), especially chosen among epoxy, silicone, polyurethane or hybrid polymer glues, preferably epoxy or polyurethane-silicone glues.

7. Wall or partition according to anyone of the preceding claims, **characterized in that** it comprises at least one third sheet (50) in steel of a thickness ranging between 1 and 5 mm, advantageously between 1.5 mm and 4 mm, of which the edges (51) are folded to form a basin with a bottom, **in that** the entity (E) with expanded metal (40) is located between the bottom of the basin formed by the first sheet (10) and the third sheet (50), **in that** the folded edges (51) of the third sheet (50) extend respectively along the folded edges of the first sheet (10), **in that** the second sheet (30) in steel substantially full with a thickness ranging between 2 and 5 mm extends in the basin formed by the third sheet (50), and
**in that** the aforementioned first and second panels (20) of the entity (E) with expanded metal (40) are preferably respectively attached to the bottom of the basin of the first sheet (10) and to the third sheet (50) by means of dots, areas or layer(s) of glue (70), especially chosen among epoxy, silicone, polyurethane or hybrid polymer glues, preferably epoxy or polyurethane-silicone glues.

8. Wall or partition according to the preceding claim, **characterized in that** between the second sheet (30) and the bottom of the basin formed by the third sheet (50) at least one panel extends (20), comprising at least fibres (advantageously at least partially cellulosic) and a binder, the aforementioned panel presenting a density of at least 600 kg/m³, preferably between 700 and 1000 kg/m³, and a thickness ranging between 3 and 15 mm, preferably between 5 and 10 mm, of which one side is attached using dots or areas of glue (70) to the second sheet (30) and/or to the bottom of the basin formed by the third sheet (50), the aforementioned glue being advantageously chosen among epoxy, silicone, polyurethane or hybrid polymer glues, preferably epoxy or polyurethane-silicone glues.

9. Wall or partition according to the preceding claim, **characterized in that** it comprises at least a fourth sheet (60) in steel with a thickness ranging between 1 and 5 mm, advantageously between 1.5 mm and 4 mm, of which the edges (61) are folded to form a basin with a bottom, **in that** the aforementioned fourth sheet (60) leans on, with interposition of at least one panel (20) comprising at least fibres (advantageously at least partially cellulosic) and a binder, the aforementioned panel (20) presenting a density of at least 600 kg/m³, preferably between 700 and 1000 kg/m³, thickness ranging between 3 and 15 mm, preferably between 5 and 10 mm, on the bottom of the basin formed by the third sheet (50), and **in that** the aforementioned panel (20) is attached to the aforementioned third sheet (50) and to the said fourth sheet (60) by means of dots or areas of glue (70), the aforementioned glue being advantageously chosen among epoxy, silicone, polyurethane or hybrid polymer glues, preferably epoxy or polyurethane-silicone glues,
the folded edges of the first, third and fourth sheets extending preferably next to each other and being preferably attached to each other by dots of glue or welding points or areas/layers of glue or welding.

10. Wall or partition according to anyone of the preceding claims, **characterized in that** the first sheet (10) is associated on the face opposed to the one forming the basin to at least one plate (120) in steel with a hardness greater than 300HB, the above mentioned plate overhanging at least one folded edge of the first sheet (10).

11. Enclosure resistant to mechanical damage and to thermal aggression, the aforementioned enclosure including at least a juxtaposition of panels or partitions according to anyone of the preceding claims.

12. Enclosure according to the preceding claim further comprising one of the pillars (2) for connecting two panels or partitions, especially extending in planes, especially vertical, inclined between them.

13. Enclosure according to the preceding claim, **characterized in that** the pillar(s) comprise (s) a hollow profile (110) advantageously closed, in steel, with a thickness ranging between 1 and 5 mm, advantageously between 2 and 4 mm, with an open inner section substantially square or rectangular, with a surface ranging between 30 and 200 mm (advantageously between 60 and 120 mm) on 30 and 200 mm (advantageously between 60 and 120 mm), **in that** an entity (E) formed by expanded metal sheet (40) in steel, advantageously curved, associated on both sides by means of glue (70) with pieces of panel (20) containing fibres (advantageously at least partially cellulosic), the aforementioned entity (E) being inserted in the aforementioned cavity of the profile, at least along one side of the profile (110), advantageously to at least substantially fit the two adjacent sides of the profile (110).

14. Enclosure according to the preceding claim, **characterized in that** the entity (E) inserted in the cavity of the profile (110) is associated with at least two additional sheets, advantageously folded, (30,50,60) and with at least pieces of fibre panel (advantageously at least partially cellulosic) placed between both additional sheets, advantageously folded, the entity advantageously associated with folded sheets with the interposition of pieces of fibre panel (advantageously at least partially cellulosic) advantageously leaving some free space or a void in the cavity filled with air.

15. Enclosure according to one of the claims 13 and 14, **characterized in that** the pieces of panel originate from a panel (20) comprising at least fibres (advantageously at least partially cellulosic) and a binder, the aforementioned panels presenting a density of at least 600 kg/m³, advantageously between 700 and 1000 kg/m³, and a thickness ranging between 3 and 15 mm, advantageously between 4 and 8 mm, and that the expanded metal sheet in steel (40), preferably flattened, has an apparent thickness ranging between 2 and 20 mm, advantageously between 2 and 6 mm, with a mesh with a short diagonal (41) ranging between 10 and 40 mm, advantageously between 20 and 30 mm, on a long diagonal (42) ranging between 15 and 80 mm, advantageously between 40 and 60 mm, but greater than the short diagonal (41), defined by straps (43) with a thickness ranging between 2 and 10 mm, advantageously between 3 and 6 mm, the aforementioned layer presenting a open passage area equal to 30 to 80% of the total area formed by the straps and the open passage area, the aforementioned expanded metal sheet (40) being preferably of the flattened type.
